# FASCICULE DE BREVET EUROPEEN

(11) **EP 4 351 891 B1**
(45) Date de publication et mention de la délivrance du brevet: **02.04.2025**
(21) Numéro de dépôt: 22740941.4
(22) Date de dépôt: 08.06.2022
(51) Int. Cl.: B60C 15/02, B60C 15/024, B60B 21/12, B60B 25/04, B60B 25/08, B60B 25/10, B60B 25/12, B60C 3/04, B60C 5/16, B60B 21/10, B60B 7/00, B60B 7/01

(54) **EXTENSEUR À STYLISME PERFECTIONNÉ ET ENSEMBLE ROULANT COMPORTANT UN TEL EXTENSEUR**
EXPANDER MIT VERBESSERTER KONSTRUKTION UND ROLLENDE ANORDNUNG MIT SOLCH EINEM EXPANDER
EXPANDER WITH IMPROVED DESIGN AND ROLLING ASSEMBLY COMPRISING SUCH AN EXPANDER

(30) Priorité: 08.06.2021 FR 2106039
(43) Date de publication de la demande: 17.04.2024
(73) Titulaire: COMPAGNIE GENERALE DES ETABLISSEMENTS MICHELIN, 63000 Clermont-Ferrand (FR)
(72) Inventeur: WALSER, Daniel, 63040 CLERMONT-FERRAND Cedex 9 (FR)
(74) Mandataire: M.F.P. Michelin
(86) Numéro de dépôt international: PCT/FR2022/051086
(87) Numéro de publication internationale: WO 2022/258923

(56) Documents cités:
- WO-A1-03/106193
- WO-A1-2016/046197
- WO-A1-2018/007751
- JP-A- H08 216 602

## Description

L'invention a pour objet un extenseur pour un ensemble roulant constitué par un pneumatique et une jante rigide reliés ensemble par un extenseur apte à offrir une certaine flexibilité élastique lors d'un choc subi pendant le roulement, ainsi qu'un ensemble roulant le comportant. Un pneumatique comprend, comme on le sait, deux bourrelets destinés à être montés sur les sièges d'une jante. La présente invention concerne les ensembles roulants dans lesquels un bourrelet de pneumatique n'est pas monté directement sur une jante rigide, mais est monté sur un extenseur flexible, extenseur qui, lui, est monté sur une jante rigide, et elle concerne plus particulièrement le stylisme d'un tel extenseur.

Un pneumatique, une jante, ainsi qu'un extenseur dont il est question dans la présente invention sont usuellement décrits par une représentation dans un plan méridien, c'est-à-dire un plan contenant l'axe de rotation du pneumatique. Tous ces produits (le pneumatique, la jante, l'extenseur) sont des objets ayant une géométrie de révolution par rapport à l'axe de rotation du pneumatique. Les directions radiale et axiale désignent respectivement les directions, la première, perpendiculaire à l'axe de rotation du pneumatique, et la seconde, parallèle à l'axe de rotation du pneumatique. Dans ce qui suit, les expressions « radialement » et « axialement » signifient respectivement « selon une direction radiale » et « selon la direction axiale ». Les expressions « radialement intérieur, respectivement radialement extérieur » signifient « plus proche, respectivement plus éloigné, de l'axe de rotation du pneumatique, selon une direction radiale ». Un plan médian est un plan perpendiculaire à l'axe de rotation du pneumatique, positionné axialement de façon à couper la surface de la bande de roulement sensiblement à mi-distance des bourrelets d'un pneumatique. Les expressions « axialement intérieur, respectivement axialement extérieur » signifient « plus proche, respectivement plus éloigné, du plan médian du pneumatique, selon la direction axiale ». Par ailleurs, par « coupe radiale » ou « section radiale », on entend une coupe ou une section selon un plan qui contient l'axe de rotation du pneumatique. Par « coupe méridienne » on comprend une coupe réalisée avec un plan méridien et, par plan méridien, on entend un plan parallèle à et contenant l'axe de rotation du pneumatique et perpendiculaire à la direction circonférentielle. Par « circonférentiellement » on comprend selon une direction circonférentielle, on entend la direction qui est sensiblement perpendiculaire à la fois à la direction axiale et à un rayon du pneumatique (en d'autres termes, tangente à un cercle dont le centre est sur l'axe de rotation du pneumatique).

Le document WO2019/002792 décrit un exemple d'extenseur flexible agencé entre un bourrelet de pneumatique et une jante. L'ensemble roulant selon ce document comprend un pneumatique, une jante et deux extenseurs identiques. En considérant les conventions de langage rappelées ci-dessus, et en se reportant à la façon dont on monte un extenseur sur une jante, un tel extenseur comprend, axialement de l'intérieur vers l'extérieur, une extrémité axialement intérieure appelée bourrelet d'extenseur et destinée à assurer l'accrochage de l'extenseur sur la jante. Un tel extenseur comprend aussi une extrémité axialement extérieure destinée à recevoir et immobiliser axialement un bourrelet de pneumatique. Un corps muni d'une armature de renfort relie les deux extrémités respectivement axialement intérieure et axialement extérieure.

Les extenseurs sont montés sur une jante qui est une pièce métallique, la plupart du temps elle étant en aluminium. La jante présente de chaque côté un crochet de jante destiné à assurer en particulier l'immobilisation en direction axiale de l'extenseur. Un extenseur flexible doit, d'une part, présenter une certaine flexibilité élastique par exemple lors d'un choc contre un trottoir ou lors du passage dans un « nid de poule » et, d'autre part, il doit présenter suffisamment de rigidité en roulage afin de conférer un comportement correct au véhicule. Pour ceci, on réalise un tel extenseur dans des matériaux élastomériques, matériaux proches de ceux utilisés pour la fabrication du pneumatique dont il emprunte l'apparence.

Ainsi, un ensemble roulant, comportant une jante et un pneumatique monté sur la jante moyennant deux extenseurs, présente l'apparence d'une roue plus petite en diamètre que celle d'une roue classique utilisée avec un pneumatique de même dimension. Or, la tendance de design actuelle est d'avoir une roue la plus grande possible, au moins dans son apparence visuelle.

Une solution a été proposée dans le document WO2018/007751 au nom de la demanderesse, solution qui consiste à rapporter un anneau enjoliveur sur la périphérie de l'extenseur. Cet anneau enjoliveur est choisi pour être déformable élastiquement, il est d'un seul tenant et est fixé par le biais d'un accrochage mécanique démontable sur la circonférence de la partie visible de l'extenseur. Or, il a été constaté que, lorsque l'extenseur subit une grande déformation, par exemple lors d'un choc contre un trottoir, il arrive que l'anneau enjoliveur se détache localement de l'extenseur, ce qui conduit à sa perte en roulage s'il n'est pas remis en place rapidement. Ce détachement local peut aussi être la conséquence d'un geste malveillant en stationnement. De surcroît, selon les matériaux choisis pour la réalisation de l'anneau enjoliveur, la différence de coefficient de dilatation de ces matériaux par rapport au caoutchouc peut conduire à rendre vulnérable la tenue mécanique de l'anneau avec l'évolution de la température.

Le but de l'invention est de remédier aux inconvénients précités et de proposer une solution de design pour un extenseur permettant une fixation robuste, même en cas de grandes déformations de l'extenseur ou lorsque la roue tourne à grande vitesse, tout en permettant une personnalisation du design de l'extenseur par l'utilisateur.

L'invention a donc pour objet un extenseur pour un ensemble roulant d'axe de rotation X-X' comprenant un pneumatique, ayant deux bourrelets et une jante, l'extenseur étant destiné à assurer la jonction entre l'un des bourrelets et la jante, ledit extenseur comprenant une extrémité axialement intérieure, une extrémité axialement extérieure et un corps orienté principalement axialement et disposé entre ladite extrémité axialement extérieure et ladite extrémité axialement intérieure, de sorte que, lorsqu'il est monté au sein de l'ensemble, ladite extrémité axialement intérieure est destinée à être immobilisée sur ladite jante à l'aide d'un élément de renfort intérieur, ladite extrémité axialement extérieure comprenant un élément de renfort extérieur est destinée à recevoir un bourrelet de pneumatique, caractérisé en ce que ladite extrémité axialement extérieure comporte une face frontale munie de plusieurs cavités réparties sur sa circonférence, lesdites cavités étant ouvertes au niveau de ladite face et réalisées de manière à coopérer avec des moyens de fixation amovible de plusieurs inserts adjacents.

Par deux cavités réparties sur la circonférence de ladite face frontale, on comprend que deux cavités sont situées côte-à-côte de manière à ce qu'un espace subsiste entre les deux, permettant de créer des ponts de matière élastomérique entre les cavités sur la circonférence de la face frontale de l'extrémité axialement extérieure de l'extenseur. Les centres géométriques des différentes cavités peuvent être situées sur un même diamètre de ladite face frontale ou sur des diamètres différents de celle-ci, par exemple en étant disposés en quinconce. La face frontale est de préférence une face visible de l'extenseur. De préférence, par face visible on entend celle de la face axialement extérieure de l'extenseur extérieur. L'extenseur intérieur peut, lui, être identique ou différent à l'extenseur extérieur, par exemple lorsqu'il est différent, il ne comporte pas d'inserts rapportés.

Les cavités selon l'invention présentent des interfaces de fixation pouvant accueillir plusieurs inserts rigides indépendants. Ainsi, les inserts étant plutôt rigides, par exemple métalliques, la zone qui sépare deux inserts fixés dans leurs cavités respectives est, elle, souple. Par ailleurs, les cavités et les inserts correspondants sont choisis d'assez petite taille, leur taille étant comparable à celle d'une déformation locale subie par l'extenseur en cas d'un choc contre un trottoir par exemple. Ceci permet à l'extenseur d'absorber une déformation en cas de choc subi par la roue, sans incidence sur l'aspect extérieur de l'extenseur et donc tout en gardant son design initial. Il en est de même lorsque plusieurs inserts rigides, indépendants ou reliés entre eux par des liens souples, sont logés dans plusieurs cavités réparties sur la face frontale de l'extenseur. Ainsi, en cas de choc subi par la roue, un tel agencement d'inserts indépendants dans un support souple permet au support des inserts de se déformer, tout en retenant bien les inserts qui y sont fixés.

De préférence, la distance qui sépare deux cavités ou deux inserts est comparable à la largeur de la face frontale de l'extrémité axialement extérieure de l'extenseur et, de préférence, inférieure à celle-ci et encore plus préférentiellement inférieure à la largeur de l'insert. Ainsi, plusieurs inserts côte-à-côte donnent l'impression visuelle d'une bande continue métallique, colorée, etc.

Lesdits moyens de fixation amovible de l'insert à l'extrémité axialement extérieure de l'extenseur peuvent comprendre des moyens de fixation par emboîtage élastique réversible des inserts dans la ou les cavités de l'extrémité axialement extérieure de l'extenseur. Ceci permet de changer facilement le design de la partie visible de l'extenseur, tout en assurant une fixation durable des inserts.

Dans un mode de réalisation, ladite cavité peut être réalisée de manière à venir coopérer avec des moyens de fixation de forme sphérique. Ceci permet une fixation facilitée, par simple pression axiale.

La profondeur d'une cavité peut être supérieure à son rayon et inférieure à son diamètre, ce qui assure une bonne tenue de l'insert dans la cavité.

Dans un autre mode de réalisation, ladite cavité peut être réalisée de manière à venir coopérer avec des moyens de fixation de type crochet. Ceci permet une fixation simple et robuste de l'insert dans la cavité de l'extenseur.

Dans un mode de réalisation, l'extenseur peut comprendre au moins une rangée circonférentielle de cavités uniformément réparties sur la circonférence de ladite face frontale. Une telle rangée de cavités permet, lorsqu'elles accueillent des inserts, de donner une impression visuelle de cercle continu et plusieurs rangées renforcent cet effet visuel.

L'extenseur peut comprendre deux rangées circonférentielles coaxiales de cavités, les cavités d'une rangée étant décalées angulairement par rapport à celles de l'autre rangée. On obtient ainsi un arrangement en quinconce des cavités des deux rangées coaxiales, ce qui procure un effet visuel d'un cercle encore plus prononcé.

Dans un autre mode de réalisation, lesdites cavités sont réalisées sous forme d'une pluralité de rainures, uniformément réparties sur la circonférence de ladite face frontale. Les rainures permettent la fixation d'un insert de forme générale allongée, ce qui assure, lorsque cet insert est métallique, un aspect globalement métallique de l'extenseur et donc de donner l'impression d'une roue de plus grand diamètre.

La section transversale desdites rainures peut avoir une forme sensiblement en queue d'aronde. Les rainures présentent ainsi une interface d'accrochage mécanique robuste pour des inserts présentant une géométrie qui coopère avec celle des rainures qui les supportent.

Lesdites rainures peuvent comporter une extrémité radialement intérieure ouverte et une extrémité radialement extérieure fermée. Ceci permet aux inserts fixés dans les rainures d'être retenus quand ils sont soumis à l'action de la force centrifuge en roulement.

Lesdites rainures peuvent être radiales ou elles peuvent chacune faire un angle aigu constant avec la direction radiale de l'extenseur.

Ladite cavité ou lesdites cavités peuvent être réalisées de manière à ce que leur extrémité radialement extérieure soit située en retrait radialement et/ou axialement par rapport à l'extrémité radialement extérieure de ladite face frontale.

Ceci permet de réaliser un assemblage dans lequel la partie protubérante de l'insert soit en retrait radialement et/ou axialement par rapport à l'extrémité radialement extérieure de ladite face frontale de l'extenseur et de protéger les inserts lors du montage du pneu sur l'extenseur quand des efforts sont appliqués par la partie basse du pneu sur l'extrémité radialement supérieure de l'extenseur.

L'invention vise aussi un insert comportant des moyens de fixation amovible et destiné à coopérer avec au moins l'une des cavités de l'extenseur de l'invention. Un tel insert permet de donner un aspect design souhaité à l'extenseur, tout en le protégeant du râpage contre le trottoir.

L'insert peut comporter une plaque munie de moyens de fixation dans au moins deux cavités adjacentes. Ceci permet de simplifier l'opération de fixation des inserts.

L'objet de l'invention est également atteint avec un assemblage comportant un extenseur selon et plusieurs inserts selon l'invention.

L'objet de l'invention est aussi atteint avec un ensemble roulant d'axe de rotation X-X' comprenant un pneumatique, ayant deux bourrelets, une jante et un extenseur selon l'invention destiné à assurer la jonction entre l'un des bourrelets et la jante, ledit extenseur étant muni d'inserts selon l'invention.

L'invention est décrite ci-après à l'aide des figures 1 à 23, données uniquement à titre d'illustration :
- la figure 1 est une vue en coupe méridienne d'un ensemble roulant comportant un extenseur selon l'invention ;
- la figure 2 est une vue de face partielle d'un assemblage comportant un extenseur et des inserts selon un premier mode de réalisation de l'invention ;
- les figures 3 à 6 sont des vues en coupe méridienne partielle d'un assemblage comportant un extenseur comportant des inserts selon différentes variantes du premier mode de réalisation de l'invention ;
- la figure 7 est une vue en perspective partielle d'un assemblage comportant un extenseur et des inserts selon un deuxième mode de réalisation de l'invention et la figure 8 une vue en coupe méridienne partielle de cet assemblage ;
- la figure 9 est une vue de face partielle d'un assemblage comportant un extenseur et des inserts selon un troisième mode de réalisation de l'invention et la figure 10 une vue en coupe partielle de cet assemblage ;
- la figure 11 est une vue en coupe méridienne partielle d'une variante de réalisation d'un extenseur selon le troisième mode de réalisation de l'invention ;
- les figures 12 et 13 sont des vues en perspective partielles des extenseurs et des inserts selon des variantes du troisième mode de réalisation de l'invention ;
- la figure 14 est une vue en perspective partielle d'un extenseur selon un quatrième mode de réalisation de l'invention et la figure 15 une vue agrandie de la face frontale de l'extenseur de la figure 14 ;
- les figures 16 et 17 sont une vue en perspective partielle et respectivement une vue en perspective partielle à échelle agrandie d'un assemblage comportant un extenseur et des inserts selon une première variante du quatrième mode de réalisation ;
- les figures 18 et 19 sont une vue en perspective partielle et respectivement une vue en perspective partielle à échelle agrandie d'un assemblage comportant un extenseur et des inserts selon une deuxième variante du quatrième mode de réalisation ;
- la figure 20 est une vue frontale d'un assemblage comportant un extenseur et des inserts selon un cinquième mode de réalisation de l'invention et les figures 21 et 22 des vues en coupe partielle à échelle agrandie de cet assemblage ;
- la figure 23 est une vue frontale d'un extenseur selon un sixième mode de réalisation de l'invention.

Sur les différentes figures, les éléments identiques ou similaires portent la même référence. Leur description n'est donc pas systématiquement reprise.

Tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

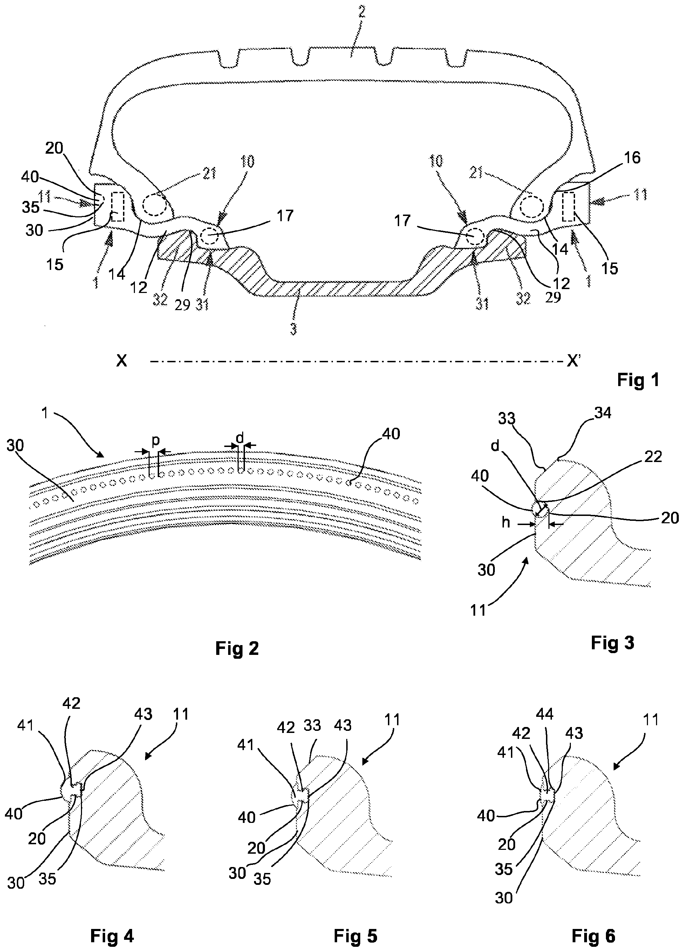

La figure 1 montre par une vue en coupe méridienne un ensemble roulant selon l'invention. Cet ensemble présente un axe de rotation X-X', il comprend deux extenseurs 1, un pneumatique 2 et une jante 3. Le pneumatique 2 comporte deux bourrelets 21. La jante 3 comporte deux sièges sur jante 31, chacun prolongé par un rebord 32 de jante. Le rebord 32 de jante comporte une face d'appui 29 radialement extérieure destinée à servir de support au corps de l'extenseur. La face d'appui 29 du rebord de jante 32 est en contact avec l'extenseur 1 lorsque le pneumatique est monté sur les extenseurs et que ceux-ci sont montés sur la jante, le pneumatique étant gonflé à la pression nominale.

L'extenseur 1 comporte une extrémité axialement intérieure 10 destinée à être montée sur l'un desdits sièges sur jante 31. Il comporte une extrémité axialement extérieure 11 munie d'un élément de renfort extérieur 15, qui est de forme annulaire, réalisé par exemple à base d'un enroulement de câbles, ainsi qu'un corps 12 orienté sensiblement axialement et disposé entre ladite extrémité axialement extérieure 11 et ladite extrémité axialement intérieure 10. L'extrémité axialement intérieure 10 de l'extenseur a une face de positionnement axial sensiblement perpendiculaire à l'axe de rotation X-X', et est immobilisée en étant plaquée axialement contre le rebord 32 de jante, sous l'effet de la pression de gonflage du pneumatique 2 et grâce à une gorge de la jante la contenant. L'extrémité axialement extérieure 11 présente un épaulement 16 formant une face sensiblement perpendiculaire à l'axe de rotation X-X'. Ledit extenseur 1 comporte un siège sur extenseur 14 qui reçoit le bourrelet 21 du pneumatique. Le bourrelet 21 est immobilisé en étant plaqué axialement sur ledit siège 14 contre ledit épaulement 16 de l'extrémité axialement extérieure 11 de l'extenseur, sous l'effet de la pression de gonflage du pneumatique.

L'extrémité axialement intérieure 10 de l'extenseur comprend un élément de renfort intérieur 17 (réalisé préférentiellement sous forme d'un enroulement de câbles) relié à l'élément de renfort extérieur 15 par une nappe de renfort (non illustrée sur les figures) réalisée à base de fils de renfort noyés dans une composition élastomérique et forme avec les éléments de renfort 15, 17 une structure interne de l'extenseur. D'autres nappes élastomériques externes entourent la structure interne de l'extenseur.

Le montage de l'ensemble se fait en agençant l'extenseur 1 sur la jante 3 et ensuite en montant le pneumatique 2 sur l'extenseur 1. Une fois le montage effectué, le bourrelet du pneumatique impose une contraction circonférentielle de l'extenseur 1.

L'extenseur de l'invention comporte plusieurs cavités 20 reparties sur la circonférence d'une face frontale 30 de l'extrémité axialement extérieure 11, cavités 20 qui sont réalisées de manière à venir coopérer avec des moyens de fixation amovible 35 de plusieurs inserts 40 adjacents fixés dans les cavités 20. Les inserts 40 de l'extenseur de la figure 1 ont une forme générale sphérique et les cavités 20 qui les reçoivent ont une forme générale de calotte sphérique permettant un emboitement des inserts 40 dans les cavités 20.

La figure 2 illustre une vue de face partielle d'un extenseur 1 selon un premier mode de réalisation. Les figures 3, 4, 5 et 6 présentent, en coupe méridienne partielle, différentes variantes de l'extenseur selon le premier mode de réalisation de l'invention.

L'extenseur 1 selon le premier mode de réalisation comprend des inserts 40 fixés dans une rangée circonférentielle de cavités 20 munies chacune de moyens de fixation amovible de chaque insert 40 à l'intérieur d'une cavité 20. On obtient ainsi une rangée circonférentielle d'inserts 40 uniformément répartis sur la circonférence de la face frontale 30, qui est une face visible de l'extenseur 1, en étant espacés d'un pas « p » l'un de l'autre (fig 2). Les moyens de fixation amovible de l'insert à l'extrémité axialement extérieure de l'extenseur comprennent des moyens de fixation par emboîtage élastique réversible des inserts dans la ou les cavités de l'extrémité axialement extérieure de l'extenseur. De préférence, le pas p est supérieur au double du diamètre de la partie visible des inserts 40.

Dans la variante des figures 1 et 3, la cavité 20 a une forme générale sphérique, elle est réalisée de manière à pouvoir recevoir un insert sphérique 40 ou bille ayant de préférence un diamètre compris entre 3 et 5 mm. Encore plus préférentiellement on choisira une bille ayant le diamètre le plus grand possible permis par l'encombrement, car ceci assure une meilleure interface avec la cavité, et donc une meilleure tenue de l'insert, tout en présentant une partie saillante assez visible. La profondeur d'une cavité 20 est inférieure à son diamètre, mais supérieure à son rayon, ce qui assure une bonne tenue de l'insert 40 dans la cavité 20, tout en lui permettant de comporter une partie saillante, par rapport à la surface plane de la face frontale 30, et donc visible. A titre d'exemple, l'insert 40 de forme sphérique de la figure 3 a un diamètre de 3 mm et il est saillant d'environ 0,6 mm par rapport à la surface plane de la face frontale 30.

Les figures 4, 5 et 6 illustrent des cavités 20 réalisées de manière à coopérer avec des inserts 40 comportant des moyens de fixation amovible 35 de type crochet permettant ainsi une fixation par clipsage élastique réversible de chaque insert 40 dans une cavité 20. Un insert 40 selon ces variantes est une pièce de révolution comportant une tête 41, qui est la partie ayant la section la plus grande et est reliée à une base de fixation 43 par une tige 42. La base de fixation 43 comporte une extrémité 44 de forme tronconique formant crochet et assurant la fixation de l'insert à l'intérieur d'une cavité 20. A titre d'exemple, la tête 41 peut avoir un diamètre de 5 mm, la tige 42 un diamètre de 2 mm et la base de fixation 43 une extrémité formant la petite base du cône de 2,4 mm prolongée vers l'avant par une paroi inclinée d'environ 15°.

Les bases de fixation des inserts 40 des figures 4 à 6 sont identiques, ces inserts étant différents entre eux plutôt par la forme et les dimensions de leur tête 41. Ainsi, la tête 41 de l'insert de la figure 4 est très protubérante, elle a la forme d'une demi-sphère. La tête 41 de l'insert de la figure 5 est plus aplatie que la précédente, elle a la forme d'une calotte sphérique faillant saillie avec ses bords par rapport à la surface de la face frontale 30. La tête 41 de l'insert de la figure 6 a également une forme de calotte sphérique comme celle de la figure 5, mais elle est moins protubérante que celle-ci, en ayant les bords enfouis en dessous de la surface de la face frontale 30. La profondeur h d'un insert 40 est de préférence supérieure à son rayon d/2 et inférieure à son diamètre d, où d est le diamètre maximal de l'insert et h est la profondeur d'enfouissement de l'insert mesurée à partir de la surface de la face frontale 30.

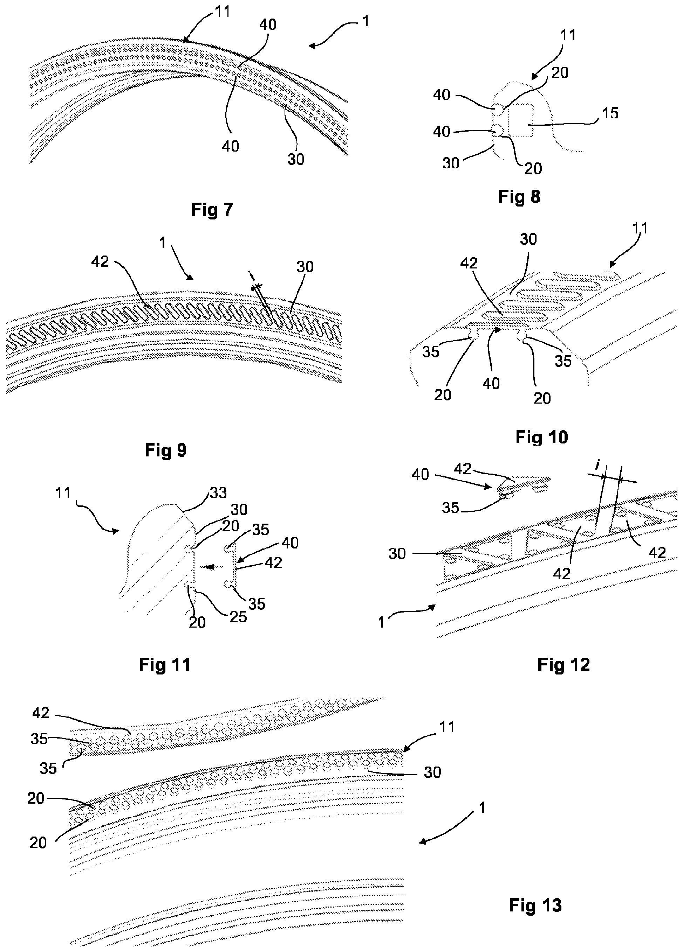

Les cavités 20 sont réalisées de manière à ce que leur extrémité radialement extérieure 22 (fig. 3) soit située en retrait radialement et/ou axialement (fig. 11) par rapport à l'extrémité radialement extérieure 34 de l'extrémité axialement extérieure 11 de l'extenseur. Dans l'exemple des figures 2 à 6, l'extrémité axialement extérieure de l'extenseur 1 comprend un chanfrein 33 prévu à cet effet. Ceci facilite le montage du pneu sur l'extenseur, tout en évitant un éventuel arrachage des inserts 40 lors de cette opération. Dans une autre variante (non illustrée) l'extrémité radialement extérieure 34 est munie d'un bourrelet (ou protubérance) de protection des inserts en étant plus protubérant que la partie la plus saillante des inserts lorsqu'ils sont fixés dans les cavités prévues à cet effet de l'extenseur.

Les figures 7 et 8 illustrent un extenseur 1 selon un deuxième mode de réalisation de l'invention. L'extenseur 1 comprend deux rangées coaxiales de cavités 20 dans lesquelles sont fixés les inserts 40. Les cavités 20 voisines des deux rangées peuvent être situées sur une même direction radiale, aux deux extrémités de la face frontale 30 (fig. 8). Dans une autre variante, telle qu'illustrée à la figure 7, les cavités 20 d'une rangée sont disposées en quinconce par rapport aux cavités 20 de la rangée voisine (on comprend que les centres des cavités d'une rangée sont décalés angulairement par rapport aux centres des cavités de la rangée voisine telle que vue dans une vue de face de l'extenseur), ce qui permet de mieux répartir les inserts sur la face frontale 30 de l'extenseur. Bien entendu, on pourrait envisager une troisième rangée, voire plusieurs rangées coaxiales de cavités, en fonction de l'encombrement disponible et des dimensions des inserts 40. Les moyens de fixation amovible sont du même type que ceux décrits en référence aux figures 1 à 6.

Les figures 9 à 13 illustrent des variantes d'un extenseur 1 selon un troisième mode de réalisation de l'invention. Les cavités 20 de l'extenseur 1 sont uniformément reparties sur la circonférence de la face frontale 30 en deux rangées coaxiales de cavités. Les cavités ont une forme générale sphérique pour coopérer avec des moyens de fixation amovibles 35 de forme sphérique des inserts 40. Un insert 40 selon ce mode de réalisation comporte une plaque 42 de forme générale plane sur sa face supérieure, visible sur la face frontale 30 de l'extenseur, en étant munie de moyens de fixations amovible sur sa face inférieure. La figure 10 illustre une variante de l'extenseur comportant des inserts 40 réalisés chacun sous forme d'une plaque plane de forme allongée munie de deux bulbes de fixation amovibles (formant les moyens de fixation amovible des inserts) d'axe perpendiculaires à la plaque à ses extrémités. La figure 11 illustre une variante dans laquelle la face frontale 30 de l'extrémité axialement extérieure 11 de l'extenseur comprend un découpage 25 dans lequel s'insère complétement la plaque 42 de l'insert 40 lorsqu'il est amené, dans le sens de la flèche illustrée sur la figure, pour être fixé dans les cavités 20. La figure 12 illustre une autre variante de réalisation dans laquelle la plaque 42 a une forme générale de triangle équilatéral munie de trois bulbes (ou sphères) de fixation dans trois cavités 20 correspondantes de forme sphérique de l'extenseur 1. Après fixation des inserts, un interstice « i » se forme ainsi entre deux plaques 42 de deux inserts 40 adjacents, interstice réalisé à base de matière élastomérique donc flexible. Les dimensions de l'interstice i sont choisies suffisamment petites pour permettre une déformation locale de l'extenseur, tout en ayant une impression visuelle de cercle formé par les inserts adjacents. A titre d'exemple, les valeurs de l'interstice i sont comprises entre 2 et 5 mm. La figure 13 illustre une autre variante de réalisation dans laquelle la plaque 42 a une forme plane en arc de cercle et comporte plusieurs bulbes de fixation dans des cavités 20 de forme sphérique de l'extenseur 1. Un interstice i existe également pour les mêmes raisons que dans les variantes précédemment décrites entre deux plaques 42 adjacentes. L'insert 40 est fixé par une simple pression axiale sur la face frontale 30 de l'extenseur, dans le sens des flèches sur la figure.

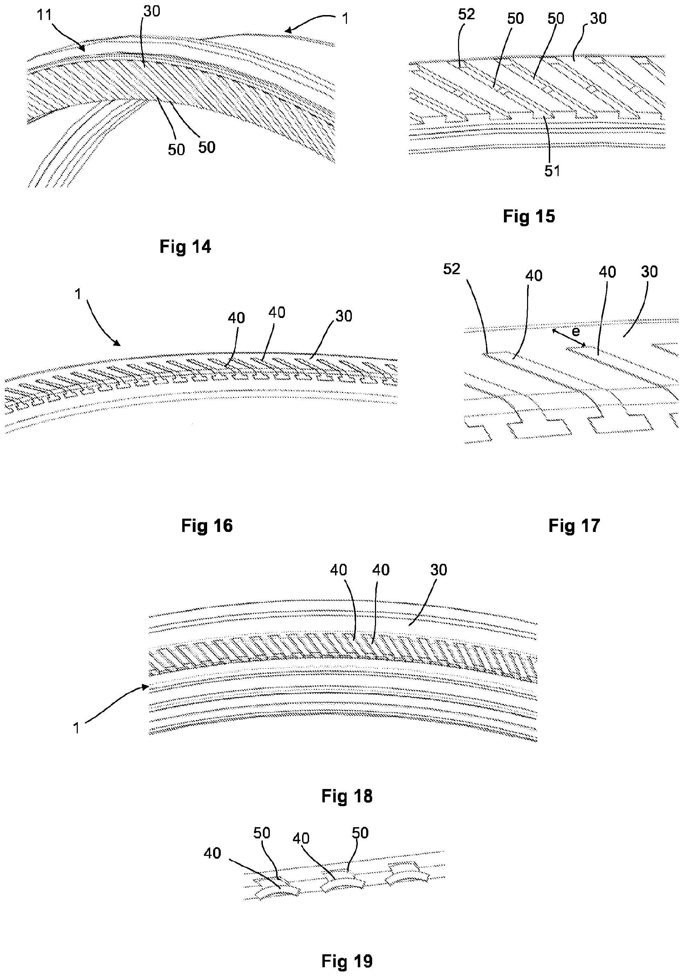

Les figures 14 à 19 illustrent différentes variantes d'un extenseur selon un quatrième mode de réalisation de l'invention. Les cavités de l'extenseur selon ce mode de réalisation sont réalisées sous forme d'une pluralité de rainures 50 uniformément réparties sur la circonférence de la face frontale 30 et formant chacune un angle constant avec une direction radiale. Les rainures 50 sont espacées d'un pas p égal ou supérieur à la largeur d'une rainure telle que mesurée sur la surface axialement la plus extérieure de celle-ci. Les rainures sont inclinées par rapport à la direction radiale, elles font un angle d'environ 40° avec celle-ci. Dans une variante (non illustrée), les rainures sont agencées selon la direction radiale de l'extenseur.

Afin d'assurer une meilleure tenue de l'insert 40 dans une rainure 50, la section transversale des rainures 50 a une forme sensiblement en queue d'aronde. Par sensiblement en queue d'aronde on comprend une section en queue d'aronde, telle qu'illustrée à la figure 15, ou en forme de T, tel qu'illustrée à la figure 17 ou encore en forme de T arquée, telle que mieux visible à la figure 19. Les inserts 40 ont une forme générale allongée, ils ont la largeur de la rainure 50 et une section transversale de forme correspondante à celle de la rainure 50, telle qu'illustrée aux figures 16, 17 et 18.

Les rainures 50 comportent une extrémité radialement intérieure 51 ouverte et une extrémité radialement extérieure 52 fermée. Tel que mieux visible à la figure 17, l'extrémité extérieure 52 de la rainure 50 est située en retrait radialement d'une distance « e » par rapport à l'extrémité radialement extérieure 34 de l'extrémité axialement extérieure 11 de l'extenseur. A titre d'exemple, la longueur d'un insert 40 est d'environ 10 mm, la distance d d'environ 4 à 5 mm, la largeur de l'insert, et donc de la partie supérieure de la rainure 50, est d'environ 2 mm, et celle de la base de fixation (la largeur du T ou de la base de la rainure 50) d'environ 3,4 mm.

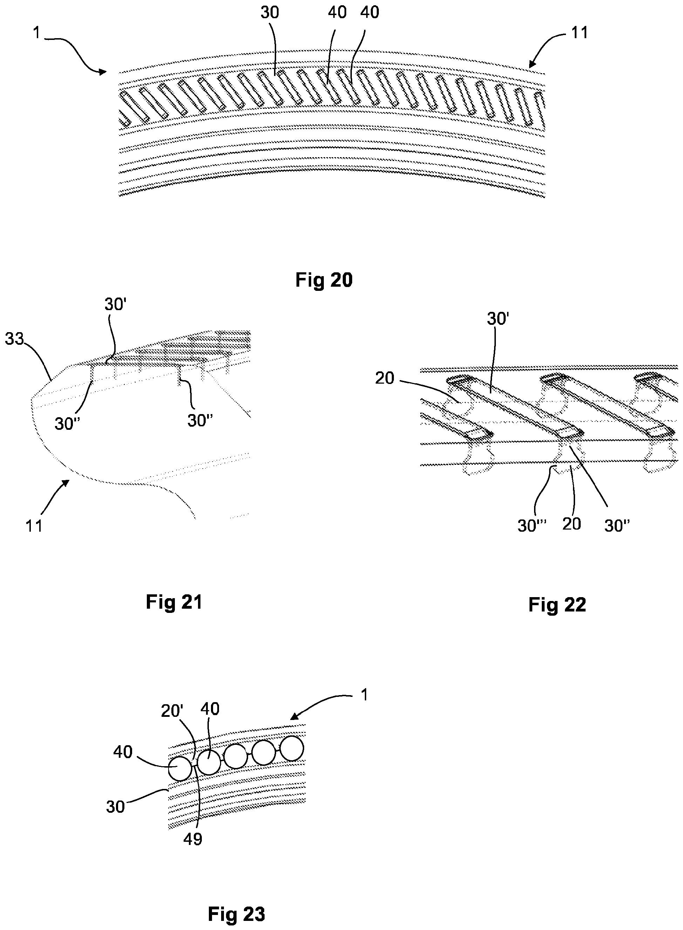

Les figures 20, 21 et 23 illustrent un extenseur 1 selon un cinquième mode de réalisation. Les inserts 40 sont du type « agrafe », ils ont donc une partie allongée plane 30', visible sur la face frontale 30 de l'extenseur, et deux pattes de fixation 30" dans deux cavités 20 parallèles de forme correspondante. Pour une meilleure fixation, l'extrémité de chaque patte 30" a une forme en crochet 30"'.

La figure 23 illustre un extenseur 1 selon un sixième mode de réalisation de l'invention. La face frontale 30 de l'extenseur comprend une seule cavité 20' circonférentielle dont la section est telle qu'elle permet la fixation amovible de plusieurs inserts 40. Dans ce mode de réalisation, les inserts 40 sont des sphères, fixées en force dans la cavité 20', les inserts étant reliés entre eux par un lien souple 49, ce qui permet de former une seule pièce plus facile à monter dans la cavité 20', tout en permettant une déformation locale de l'extenseur encaissée au niveau des liens souples. Dans une variante de ce mode de réalisation, des empreintes sphériques de diamètre comparable à celui des inserts et sensiblement différent de la largeur de la cavité sont pratiquées sur son pourtour permettant de mieux loger des inserts de forme sphérique.

Les inserts 40 sont de préférence métalliques, ils sont par exemple réalisés en acier inoxydable. Dans une variante, ils sont en un matériau plastique métallisé. Dans une autre variante, ils sont réalisés en une matière plastique colorée. Dans encore une autre variante, la face supérieure de l'insert comprend une lettre ou symbole ou partie de lettre ou de symbole (ce qui permet par exemple à plusieurs inserts adjacents de former un mot ou symbole, par exemple celui représentatif de la marque de l'automobile sur lequel est monté l'ensemble roulant).

Bien entendu, la solution de l'invention offre à l'utilisateur la possibilité de changer à tout moment le design de l'extenseur en choisissant les inserts qu'il souhaite.

L'invention ne se limite pas aux modes de réalisation décrits précédemment.

En effet, on pourra combiner les différents modes de réalisation décrits ci-dessus, notamment combiner les moyens de fixation des inserts des figures 4 à 6 à ceux des figures 7 à 13.

On pourra également appliquer les caractéristiques des moyens de fixation de l'insert des figures 12 et 13 aux autres modes de réalisation.

## Revendications

1. Extenseur pour un ensemble roulant d'axe de rotation X-X' comprenant un pneumatique (2), ayant deux bourrelets (21) et une jante (3), l'extenseur (100) étant destiné à assurer la jonction entre l'un des bourrelets (21) et la jante (3), ledit extenseur (100) comprenant une extrémité axialement intérieure (10), une extrémité axialement extérieure (11) et un corps (12) orienté principalement axialement et disposé entre ladite extrémité axialement extérieure (11) et ladite extrémité axialement intérieure (10), de sorte que, lorsqu'il est monté au sein de l'ensemble, ladite extrémité axialement intérieure (10) est destinée à être immobilisée sur ladite jante à l'aide d'un élément de renfort intérieur (17), ladite extrémité axialement extérieure comprenant un élément de renfort extérieur (15) est destinée à recevoir un bourrelet (21) de pneumatique (2), **caractérisé en ce que** ladite extrémité axialement extérieure (11) comporte une face frontale (30) munie de plusieurs cavités (20) réparties sur sa circonférence, lesdites cavités étant ouvertes au niveau de ladite face et réalisées de manière à coopérer avec des moyens de fixation amovible (35) de plusieurs inserts (40) adjacents.

2. Extenseur selon la revendication 1, **caractérisé en ce que** lesdits moyens de fixation amovible (35) de l'insert (40) à l'extrémité axialement extérieure (11) de l'extenseur (1) comprennent des moyens de fixation par emboîtage élastique réversible des inserts (40) dans la cavité (20') ou les cavités (20) de l'extrémité axialement extérieure (11) de l'extenseur.

3. Extenseur selon l'une des revendications 1 ou 2, **caractérisé en ce que** ladite cavité (20', 20) est réalisée de manière à venir coopérer avec des moyens de fixation de forme sphérique.

4. Extenseur selon l'une des revendications 1 ou 2, **caractérisé en ce que** ladite cavité (20) est réalisée de manière à venir coopérer avec des moyens de fixation de type crochet.

5. Extenseur selon l'une des revendications précédentes, **caractérisé en ce qu'**il comprend au moins une rangée circonférentielle de cavités (20).

6. Extenseur selon l'une des revendications 1 à 4, **caractérisé en ce qu'**il comprend deux rangées circonférentielles coaxiales de cavités (20), les cavités d'une rangée étant décalées angulairement par rapport à celles de l'autre rangée.

7. Extenseur selon l'une des revendications précédentes, **caractérisé en ce que** lesdites cavités sont des rainures (50) uniformément réparties sur la circonférence de ladite face frontale.

8. Extenseur selon la revendication 7, **caractérisé en ce que** la section transversale desdites rainures (50) a une forme sensiblement en queue d'aronde.

9. Extenseur selon l'une des revendications 7 ou 8, **caractérisé en ce que** lesdites rainures (50) comportent une extrémité radialement intérieure (51) ouverte et une extrémité radialement extérieure (52) fermée.

10. Extenseur selon l'une des revendications 7 à 9, **caractérisé en ce que** lesdites rainures (50) sont radiales ou elles forment chacune un angle aigu constant avec la direction radiale de l'extenseur.

11. Extenseur selon l'une des revendications précédentes, **caractérisé en ce que** la cavité ou les cavités sont réalisées de manière à ce que leur extrémité radialement extérieure (22) soit située en retrait radialement et/ou axialement par rapport à l'extrémité radialement extérieure (34) de l'extrémité axialement extérieure (11) de l'extenseur.

12. Insert (40) comportant des moyens de fixation amovible (35) destiné à coopérer avec au moins l'une des cavités (20) de l'extenseur (1) selon l'une des revendications précédentes.

13. Insert selon la revendication 12, **caractérisé en ce qu'**il comporte une plaque (42) munie de moyens de fixation dans au moins deux cavités (20) adjacentes.

14. Assemblage comportant un extenseur (1) selon l'une des revendications 1 à 11 et plusieurs inserts (40) selon l'une des revendications 12 à 13.

15. Ensemble roulant d'axe de rotation X-X' comprenant un pneumatique (2), ayant deux bourrelets (21) une jante (3) et un extenseur (1) selon l'une des revendications 1 à 11 destiné à assurer la jonction entre l'un des bourrelets (21) et la jante (3), ledit extenseur étant muni d'inserts (40) selon l'une des revendications 12 à 13.

## Patentansprüche

1. Expander für eine rollende Einheit mit der Rotationsachse X-X', umfassend einen Reifen (2) mit zwei Wülsten (21) und eine Felge (3), wobei der Expander (100) dazu bestimmt ist, die Verbindung zwischen einem der Wülste (21) und der Felge (3) zu gewährleisten, wobei der Expander (100) ein axial inneres Ende (10), ein axial äußeres Ende (11) und einen Körper (12), der hauptsächlich axial ausgerichtet ist und zwischen dem axial äußeren Ende (11) und dem axial inneren Ende (10) angeordnet ist, umfasst, so dass, wenn er in der Einheit montiert ist, das axial innere Ende (10) dazu bestimmt ist, auf der Felge mithilfe eines inneren Verstärkungselements (17) immobilisiert zu werden, wobei das axial äußere Ende, das ein äußeres Verstärkungselement (15) umfasst, dazu bestimmt ist, einen Wulst (21) des Reifens (2) aufzunehmen, **dadurch gekennzeichnet, dass** das axial äußere Ende (11) eine Stirnfläche (30) beinhaltet, die mit mehreren Hohlräumen (20) versehen ist, die über ihren Umfang verteilt sind, wobei die Hohlräume an der Fläche offen sind und so ausgeführt sind, dass sie mit Mitteln zur lösbaren Befestigung (35) von mehreren benachbarten Einsätzen (40) zusammenwirken.

2. Expander nach Anspruch 1, **dadurch gekennzeichnet, dass** die Mittel zur lösbaren Befestigung (35) des Einsatzes (40) an dem axial äußeren Ende (11) des Expanders (1) Mittel zur Befestigung durch reversibles elastisches Einstecken der Einsätze (40) in den Hohlraum (20') oder die Hohlräume (20) des axial äußeren Endes (11) des Expanders umfassen.

3. Expander nach einem der Ansprüche 1 oder 2, **dadurch gekennzeichnet, dass** der Hohlraum (20', 20) so ausgeführt ist, dass er mit kugelförmigen Befestigungsmitteln zusammenwirkt.

4. Expander nach einem der Ansprüche 1 oder 2, **dadurch gekennzeichnet, dass** der Hohlraum (20) so ausgeführt ist, dass er mit hakenartigen Befestigungsmitteln zusammenwirkt.

5. Expander nach einem der vorhergehenden Ansprüche, **dadurch gekennzeichnet, dass** er mindestens eine umfängliche Reihe von Hohlräumen (20) umfasst.

6. Expander nach einem der Ansprüche 1 bis 4, **dadurch gekennzeichnet, dass** er zwei koaxiale umfängliche Reihen von Hohlräumen (20) umfasst, wobei die Hohlräume einer Reihe in Bezug auf diejenigen der anderen Reihe winklig versetzt sind.

7. Expander nach einem der vorhergehenden Ansprüche, **dadurch gekennzeichnet, dass** die Hohlräume Nuten (50) sind, die gleichmäßig über den Umfang der Stirnfläche verteilt sind.

8. Expander nach Anspruch 7, **dadurch gekennzeichnet, dass** der Querschnitt der Nuten (50) eine im Wesentlichen schwalbenschwanzartige Form hat.

9. Expander nach einem der Ansprüche 7 oder 8, **dadurch gekennzeichnet, dass** die Nuten (50) ein offenes radial inneres Ende (51) und ein geschlossenes radial äußeres Ende (52) beinhalten.

10. Expander nach einem der Ansprüche 7 bis 9, **dadurch gekennzeichnet, dass** die Nuten (50) radial sind oder jeweils einen konstanten spitzen Winkel mit der radialen Richtung des Expanders bilden.

11. Expander nach einem der vorhergehenden Ansprüche, **dadurch gekennzeichnet, dass** der Hohlraum oder die Hohlräume so ausgeführt sind, das ihr radial äußeres Ende (22) in Bezug auf das radial äußere Ende (34) des axial äußeren Endes (11) des Expanders radial und/oder axial zurückversetzt ist.

12. Einsatz (40), der Mittel zur lösbaren Befestigung (35) beinhaltet und dazu bestimmt ist, mit mindestens einem der Hohlräume (20) des Expanders (1) nach einem der vorhergehenden Ansprüche zusammenzuwirken.

13. Einsatz nach Anspruch 12, **dadurch gekennzeichnet, dass** er eine Platte (42) beinhaltet, die mit Mitteln zur Befestigung in mindestens zwei benachbarten Hohlräumen (20) versehen ist.

14. Anordnung, die einen Expander (1) nach einem der Ansprüche 1 bis 11 und mehrere Einsätze (40) nach einem der Ansprüche 12 bis 13 beinhaltet.

15. Rollende Einheit mit der Rotationsachse X-X', umfassend einen Reifen (2) mit zwei Wülsten (21), eine Felge (3) und einen Expander (1) nach einem der Ansprüche 1 bis 11, der dazu bestimmt ist, die Verbindung zwischen einem der Wülste (21) und der Felge (3) zu gewährleisten, wobei der Expander mit Einsätzen (40) nach einem der Ansprüche 12 bis 13 versehen ist.

## Claims

1. Expander for a rolling assembly of rotation axis X-X' comprising a tyre (2), having two beads (21) and a rim (3), the expander (100) being intended to provide the junction between one of the beads (21) and the rim (3), said expander (100) comprising an axially inner end (10), an axially outer end (11) and a body (12) oriented principally axially and arranged between said axially outer end (11) and said axially inner end (10), such that, when mounted within the assembly, said axially inner end (10) is intended to be immobilized on said rim by means of an inner reinforcing element (17), said axially outer end comprising an outer reinforcing element (15) is intended to receive a bead (21) of a tyre (2), **characterized in that** said axially outer end (11) includes a front face (30) provided with several cavities (20) distributed around the circumference thereof, said cavities being open on said face and formed so as to cooperate with means (35) for removably fastening several adjacent inserts (40).

2. Expander according to Claim 1, **characterized in that** said means (35) for removably fastening the insert (40) to the axially outer end (11) of the expander (1) comprise means for fastening the inserts (40) by reversible elastic engagement in the cavity (20') or the cavities (20) of the axially outer end (11) of the expander.

3. Expander according to one of Claims 1 and 2, **characterized in that** said cavity (20', 20) is formed so as to cooperate with spherical fastening means.

4. Expander according to one of Claims 1 and 2, **characterized in that** said cavity (20) is formed so as to cooperate with hook-shaped fastening means.

5. Expander according to one of the preceding claims, **characterized in that** it comprises at least one circumferential row of cavities (20).

6. Expander according to one of Claims 1 to 4, **characterized in that** it comprises two coaxial circumferential rows of cavities (20), the cavities of one row being offset angularly with respect to the cavities of the other row.

7. Expander according to one of the preceding claims, **characterized in that** said cavities are slots (50) uniformly distributed around the circumference of said front face.

8. Expander according to Claim 7, **characterized in that** the cross-section of said slots (50) is substantially dovetail-shaped.

9. Expander according to one of Claims 7 and 8, **characterized in that** said slots (50) have an open radially inner end (51) and a closed radially outer end (52).

10. Expander according to one of Claims 7 to 9, **characterized in that** said slots (50) are radial or each form a constant acute angle with the radial direction of the expander.

11. Expander according to one of the preceding claims, **characterized in that** the cavity or cavities are formed in such a way that the radially outer end (22) thereof is set back radially and/or axially with respect to the radially outer end (34) of the axially outer end (11) of the expander.

12. Insert (40) including removable fastening means (35) intended to cooperate with at least one of the cavities (20) of the expander (1) according to one of the preceding claims.

13. Insert according to Claim 12, **characterized in that** it includes a plate (42) provided with fastening means for fastening in at least two adjacent cavities (20).

14. Assembly including an expander (1) according to one of Claims 1 to 11 and several inserts (40) according to one of Claims 12 and 13.

15. Rolling assembly of rotation axis X-X' comprising a tyre (2), having two beads (21), a rim (3) and an expander (1) according to one of Claims 1 to 11 intended to provide the junction between one of the beads (21) and the rim (3), said expander being provided with inserts (40) according to one of Claims 12 and 13.
